# EUROPÄISCHE PATENTSCHRIFT

(11) **EP 3 129 275 B1**
(45) Veröffentlichungstag und Bekanntmachung des Hinweises auf die Patenterteilung: **16.05.2018**
(21) Anmeldenummer: 15709096.0
(22) Anmeldetag: 10.03.2015
(51) Int. Cl.: B62D 35/00, B62D 37/02

(54) **HECKSPOILEREINRICHTUNG FÜR EIN FAHRZEUG**
REAR SPOILER DEVICE FOR A VEHICLE
DISPOSITIF DÉFLECTEUR ARRIÈRE POUR UN VÉHICULE

(30) Priorität: 11.04.2014 DE 102014005374
(43) Veröffentlichungstag der Anmeldung: 15.02.2017
(73) Patentinhaber: WABCO Europe BVBA, 1170 Brussels (BE)
(72) Erfinder: DIECKMANN, Thomas, 30982 Pattensen (DE); KROST, Jakob Tobias, 38106 Braunschweig (DE); OLEKSIK, Josef, 38106 Braunschweig (DE); RICHTER, Timo, 38106 Braunschweig (DE); VAN RAEMDONCK, Gandert Marcel Rita, NL-2611 PW Delft (NL); ZIELKE, Frank, 30890 Barsinghausen (DE)
(74) Vertreter: Lauerwald, Jörg
(86) Internationale Anmeldenummer: PCT/EP2015/000527
(87) Internationale Veröffentlichungsnummer: WO 2015/154842

(56) Entgegenhaltungen:
- CA-A1- 2 361 224

## Beschreibung

Die Erfindung betrifft eine Heckspoilereinrichtung für ein Fahrzeug, insbesondere Nutzfahrzeug, z. B. einen Lkw, wobei das Fahrzeug mindestens eine Hecktür, insbesondere zwei Hecktüren aufweist. Die Heckspoilereinrichtung ist insbesondere für ein Fahrzeug mit im Wesentlichen kastenförmigem Aufbau bzw. mit Seitenwänden, Dach und diese nach hinten rechtwinklig abschließenden Hecktüren geeignet.

Die US 6,799,791 B2 zeigt eine derartige Heckspoilereinrichtung. Sie weist Luftleitelemente zur Konturverlängerung und aerodynamischen Luftleitung auf, die die Seitenwände und das Dach in einer Fahrstellung nach hinten verlängern, insbesondere mit einem Verlauf nach innen hin zur Querschnittsverringerung. In der Grundstellung ist die Heckspoilereinrichtung eingefahren. Hierbei ist ein Faltmechanismus vorgesehen, um die mehreren Flächen in der Grundstellung ineinander zu falten; der Faltvorgang wird durch ein von einem Benutzer manuell zu bedienendes Gestänge mit einer Kurbel durchgeführt. Die beiden Seiten-Luftleitelemente sind in seitlich äußeren Bereichen des Hecks angelenkt; das Dach-Luftleitelement ist entsprechend an einem oberen Ende des Hecks angelenkt, so dass die Luftleitelemente jeweils nach innen einklappen oder einfalten und nach außen aufklappen können. Sie sind durch ein Verbindungsteil miteinander gekoppelt, das bei dem Einfahrvorgang eine Faltung ermöglicht.

Die Anbindung der Luftleitelemente erfolgt somit im Scharnierbereich der Hecktüren. Derartige Anbindungen sind jedoch im Allgemeinen aufwändig und erfordern zum Teil spezielle Scharnier-Ausbildungen. Beim Aufschwenken der Hecktüren um 270° nach vorne sind derartige Anbindungen der Luftleitelemente nachteilhaft, da sie den Aufschwenkvorgang beeinträchtigen können, wobei der Bauraum im Scharnierbereich ohnehin begrenzt ist. Die DE 102 28 658 A1 zeigt Klapplösungen, bei denen über ein Scharnier schwenkbare Planflächen im Fahrbereich eine aerodynamische Optimierung ermöglichen sollen.
Die DE 20 2009 014 476 U1, DE 20 2009 014 510 U1 und DE 20 2009 015 009 U1 zeigen Heckspoilereinrichtungen, bei denen Luftleitelemente verschiebbar oder schwenkbar angeordnet sind, um ein ungestörtes Öffnen der Hecktüren zu ermöglichen. Weiterhin ist aus der CA 2 361 224 A1 eine Heckspoilereinrichtung gemäß dem Oberbegriff des Anspruchs 1 bekannt.

Derartige Systeme sind oftmals für den Benutzer schwer zu bedienen, insbesondere bei Bedienungsgestängen wie Kurbeln usw. Die zusätzlichen Handhabungseinrichtungen erhöhen das Gesamtgewicht und die Kosten. Die Verstellung kann zu einem Klemmen führen; auch können die Verstellbewegungen nicht eindeutig definiert sein und somit zu einem für den Benutzer störenden Flattern bzw. einer ungenauen Verstellbewegung führen. Der Erfindung liegt die Aufgabe zugrunde, eine Heckspoilereinrichtung zu schaffen; die mit relativ geringem Aufwand ausbildbar ist und eine sichere Verstellung zwischen Fahrstellung und Rückstellung ermöglicht.
Diese Aufgabe wird durch eine Heckspoilereinrichtung nach Anspruch 1 gelöst. Die Unteransprüche beschreiben bevorzugte Weiterbildungen. Weiterhin ist eine Heckspoiler-Anordnung aus zwei derartigen Heckspoilereinrichtungen zur Anbringung an zwei Hecktüren eines Fahrzeugs vorgesehen, und ein Fahrzeug mit einer derartigen Heckspoileranordnung.
Somit ist eine Kopplungseinrichtung vorgesehen, die die Verstellbewegung des Seiten-Luftleitelementes und des Dach-Luftleitelementes koppelt. Die Kopplung ist vorteilhafterweise zwischen einer Unterseite bzw. Unterfläche des Dach-Luftleitelementes und einem oberen Endbereich bzw. oberen Ende des Seiten-Luftleitelementes ausgebildet. Vorteilhafterweise gleitet oder verläuft ein Kopplungselement des Seiten-Luftleitelementes an der Unterseite des Dach-Luftleitelementes entlang.

Somit liegt keine Faltung mit Faltlinien wie in der US 6,799,791 B2 und vorteilhafterweise keine gleichberechtigte Kopplung zwischen dem Seiten-Luftleitelement und dem Dach-Luftleitelement vor, sondern das Dach-Luftleitelement wird durch das Seiten-Luftleitelement verstellt, indem das obere Ende des Seiten-Luftleitelementes an der Unterseite des Dach-Luftleitelementes entlang gleitet oder verläuft. Hierbei beschreibt die Oberseite des Seiten-Luftleitelementes, vorteilhafterweise ein Kopplungselement an der Oberseite, einen bogenförmigen Verlauf oder eine bogenförmige Kontur an der Unterseite des Dach-Luftleitelementes.

Die Kopplungseinrichtung kann als eine druck- und zugstabilen Kopplung ausgebildet sein, d. h. vorteilhafterweise als z. B. formschlüssiger Eingriff. Hierzu kann z. B. eine Schienenführung vorgesehen sein, so dass ein an der Oberseite oder in einem oberen Bereich des Seiten- Luftleitelementes vorgesehenes Kopplungselement in der Schiene der Unterseite des Dach-Luftleitelementes gleitet. Die zug- und druckstabile Ausbildung ermöglicht eine feste Kopplung, die auch in den beiden Endstellungen eine sichere Verbindung gewährleistet. Somit können auch ein Flattern oder höhere Reibungsverluste bei der Verstellung verringert oder verhindert werden.

Alternativ zu einem derartigen Schienensystem ist auch eine direkte Auflage des Dach-Luftleitelementes auf dem Seiten-Luftleitelement möglich, so dass eine schwerkraftgestützte vorzugsweise auch federbelastete Kopplung vorliegt: Beim Aufstellvorgang von der Grundstellung in die Fahrstellung wird das Dach- Luftleitelement gegen die Schwerkraft, gegebenenfalls zusätzlich gegen eine Federkraft, nach oben geschwenkt; bei der Rückverstellung folgt es dem Seiten-Luftleitelement, indem es schwerkraftunterstützt herab schwenkt, wobei ergänzend vorteilhafterweise eine Federkraft nach unten wirkt.

Die druck- und zugstabile Kopplung und die Federvorspannung dienen jeweils insbesondere dazu, ein Flattern und Vibrieren sowie Schwingungen zu verringern oder zu verhindern, und auch eine Verstellung aufgrund des Fahrtwindes zu verhindern.

Das Seiten-Luftleitelement wird durch eine Verstelleinrichtung verstellt, die vorteilhafterweise eine Zwangsführung oder eindeutige Führung gewährleistet, so dass keine unnötigen Freiheitsgrade die Benutzung erschweren und zu ungenauen Positionen gegenüber dem Dach-Luftleitelement führen. Vorteilhafterweise erfolgt nicht einfach eine Klappbewegung um eine Achse im Scharnierbereich der Tür, sondern eine Schwenkbewegung unter Verstellung des vorderen Endes des Dach-Luftleitelementes. Besondere vorteilhaft ist eine Vier-Gelenk-Kopplung mit vier zueinander parallelen und zueinander versetzten Gelenkachsen. Die Vier-Gelenk-Kopplung kann insbesondere durch eine Hauptschwinge mit größerer Länge bzw. größerem Abstand zwischen ihren Achsen und ein oder mehreren Nebenschwingen erfolgen. Somit kann ein Schwenkvorgang von einer Fahrstellung, bei der das Seiten-Luftleitelement flach auf der Hecktür aufliegt, nach vorne und hinten in die Fahrstellung ermöglicht werden. Eine derartige Schwenkbewegung ermöglicht insbesondere auch, dass das vordere Ende des Seiten- Luftleitelementes an die Seitenwand oder eine Seitenfläche der Fahrzeugstruktur gelangt, so dass hier ein bündiger Abschluss ist. Der Scharnierbereich der Hecktür wird hierdurch nicht mit weiteren Applikationen oder Anbindungen beansprucht; der Schwenkvorgang ist für den Nutzer einfach durchführbar und mit wenig Aufwand erreichbar und ermöglicht genau einstellbare Positionen der Grundstellung und der Fahrstellung.

### Hieraus ergeben sich weitere Vorteile:

Die Vier-Gelenk-Kopplung ermöglicht eine Schwenkbewegung des Seiten-Luftleitelementes, die zu einer großen Bogenlänge der kreisbogenförmigen Spur zwischen dem Kopplungselement des Seiten-Luftleitelementes und der Unterseite des Dach-Luftleitelementes führt. Hierdurch wird eine hohe Kraftuntersetzung und somit ein gleichmäßiger und geringe Kraft erfordernder Aufstellvorgang für das Dach-Luftleitelement erreicht, insbesondere im Vergleich zu einem lediglich an seinem vorderen Ende an der Hecktür angelenkten und aufklappenden Seiten-Luftleitelement.

Die gesamte Heckspoilereinrichtung kann an der Hecktür vorgesehen sein. Vorteilhafterweise ist sie in ihrer Grundstellung vollständig flach auf die Hecktür auflegbar, so dass die Hecktür nach Öffnen um 270° nach vorne geschwenkt werden kann, und die eingefaltete Heckspoilereinrichtung vollständig zwischen der Hecktür und der Seitenwand aufnehmbar ist, wobei die Hecktür hierbei an der Seitenwand verriegelbar ist.

Die Heckspoilereinrichtung kann an jeder von zwei schwenkbaren Hecktüren separat und unabhängig voneinander vorgesehen sein. Somit ermöglicht sie einen wahlweisen Zugang zu einer der Hecktüren, ohne dass die Heckspoilereinrichtung der anderen Hecktüre zunächst in die Grundstellung einzufalten ist.

Ergänzend können Federwirkungen vorgesehen sein, die die Zwangsführung unterstützen. So kann die Federbelastung des Seiten-Luftleitelementes bistabil ausgebildet sein, und somit jeweils in die Grundstellung und die Fahrstellung vorgespannt sein. Der Benutzer drückt somit von der Grundstellung ausgehend das Luftleitelement zunächst in einem ersten Schwenkbereich gegen die Federwirkung bis zu einem zwischenzeitlichen Totpunkt, von dem aus in einem zweiten Schwenkbereich in selbstständiger oder zumindest federunterstützter Aufschwenkvorgang in die Fahrstellung erfolgt, und umgekehrt zurück von der Fahrstellung in die Grundstellung. Hierdurch können Fehler in der Verstellung verhindert und die Bedienung erleichtert werden.

Weiterhin ist eine Heckspoileranordnung aus zwei derartigen Heckspoilereinrichtungen für einen Heckbereich eines Fahrzeugs mit zwei Hecktüren vorgesehen, und ein Fahrzeug, das eine sichere Verstellung seiner beiden Heckspoilereinrichtung von der Grundstellung in die Fahrstellung ermöglicht, weiterhin einen wahlweisen Zugang zu den Hecktüren, und ein Vorklappen der Hecktüren nach vorne zur Anlage an der Seitenwand, ohne dass die Heckspoilereinrichtungen hierbei störend wirken. Die Fahrstellung ist solide und in sich verstärkt, z. B. durch die Kopplungseinrichtung und die stabilisierend wirkenden Schwingen, die vorteilhafterweise eine Dreiecksausbildung und somit hohe Stabilität gewährleisten.

Die Grundstellung und die Fahrstellung können ergänzend verriegelt werden, z. B. durch Verriegelungseinrichtungen zur Verriegelung einer Seitenschwinge an der Hecktür, ggf. auch ergänzend des Dach-Luftleitelementes, das jedoch bereits auch durch die Kopplungseinrichtung mit verriegelt wird.

Die Erfindung wird im Folgenden anhand der beiliegenden Zeichnungen an einigen Ausführungsformen näher erläutert. Es zeigen:
- Fig. 1: einen Heckbereich eines Fahrzeugs mit einer Heckspoilereinrichtung gemäß einer Ausführungsform der Erfindung in Grundstellung;
- Fig. 2: einen ersten Zwischenschritt zum Aufstellen der linken Heckspoilereinrichtung;
- Fig. 3: die linke Heckspoilereinrichtung in Fahrstellung;
- Fig. 4: die vollständige Fahrstellung einer ersten Ausführungsform mit zug- und druckstabiler Kopplungseinrichtung;
- Fig. 5: die Fahrstellung bei einer zu Fig. 4 alternativen Ausführungsform mit schwerkraftunterstützter Kopplung;
- Fig. 6 bis 8: Aufsichten auf die rechte Hecktüre ohne Dach- Luftleitelement in aufeinander folgenden Verstellpositionen.

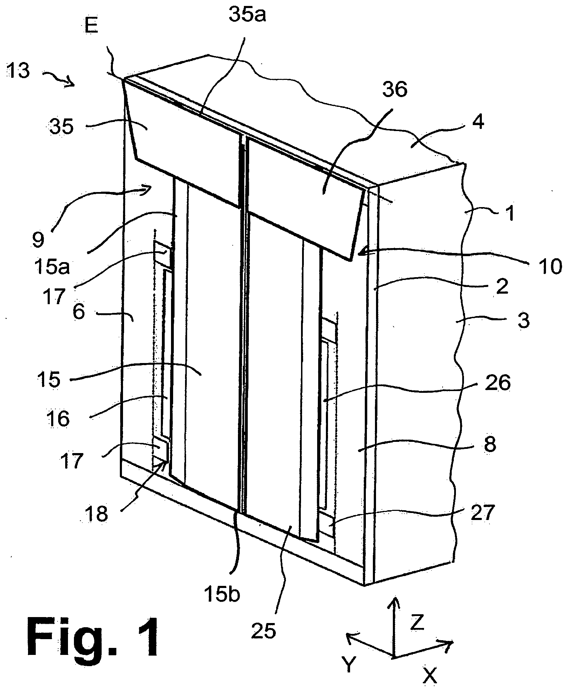

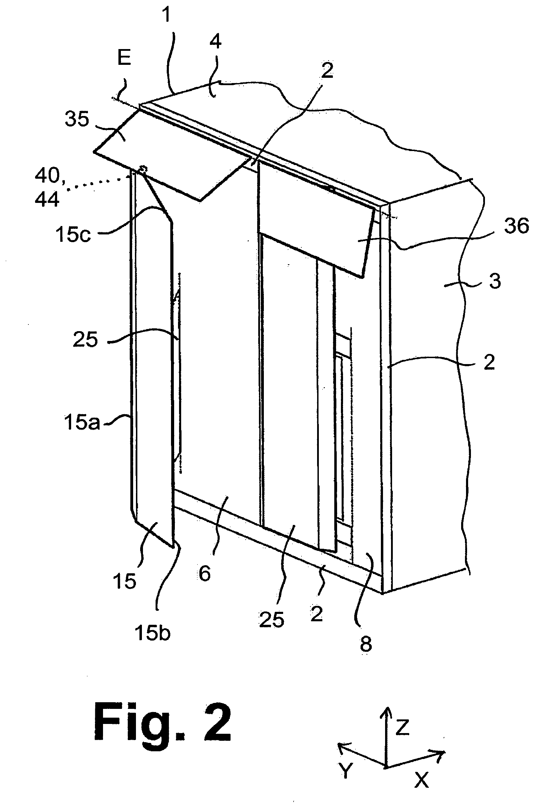

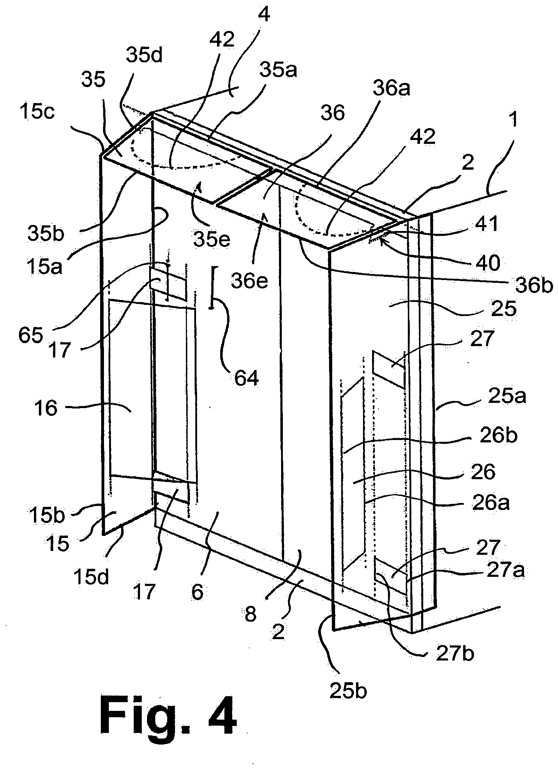

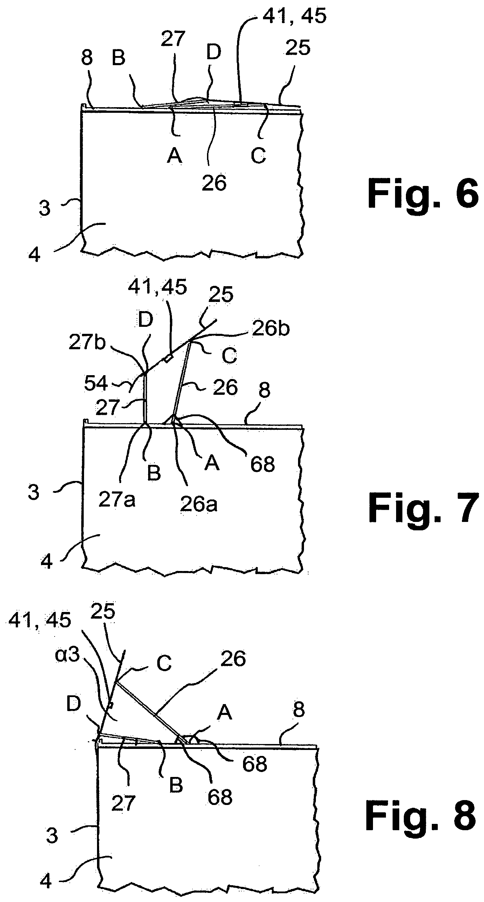

Gemäß Fig. 1 ist ein Fahrzeug 1, insbesondere ein Nutzfahrzeug wie z. B. ein Lkw, mit seinem Heckbereich gezeigt. Das Fahrzeug 1 weist eine Fahrzeugstruktur 2, die insbesondere als Fahrzeugrahmen bzw. hinteres Fahrzeugportal dargestellt ist, Seitenwände 3, ein Dach 4 und eine (in Fahrtrichtung) linke Hecktür 6 sowie eine rechte Hecktür 8 auf. An der linken Hecktür 6 ist eine linke Heckspoilereinrichtung 9 befestigt, deren Verstellung in den Figuren 1 bis 3 gezeigt ist. Entsprechend ist an der rechten Hecktür 8 eine rechte Heckspoilereinrichtung 10 angebracht, die in den Fig. 1 bis 3 zunächst in Grundstellung ist und in Fig. 4 in der ausgeschwenkten Fahrstellung gezeigt ist, wobei die Figuren 6 bis 8 die Verstellung in Aufsicht zeigen. Beide Heckspoilereinrichtungen 9 und 10 sind lediglich an der jeweiligen Hecktür 6 bzw. 8 angebracht und entsprechend der Schwenkrichtung der Hecktür 6 bzw. 8 spiegelsymmetrisch zueinander vorgesehen. Beide Heckspoilereinrichtungen 9 und 10 zusammen bilden eine Heckspoiler-Anordnung 13.

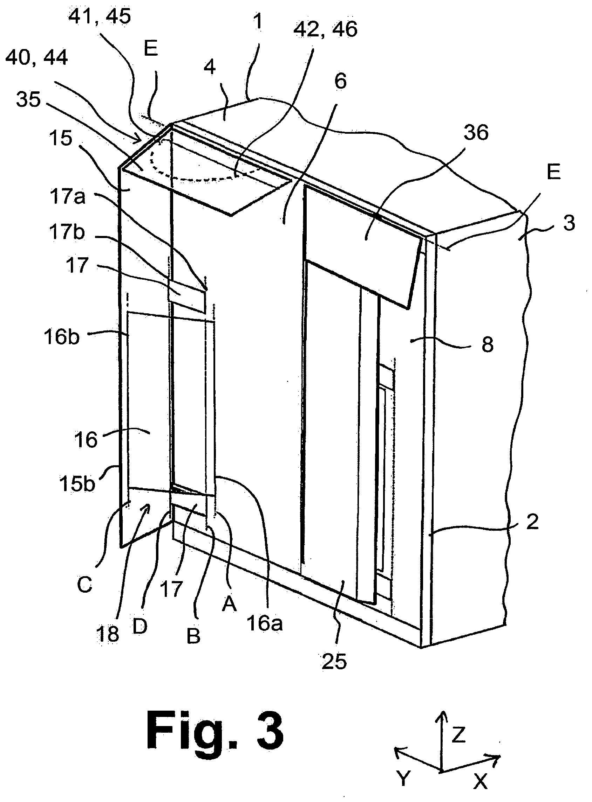

Die linke Heckspoilereinrichtung 9 und die rechte Heckspoilereinrichtung 10 lassen sich jeweils unabhängig voneinander und durch einen Benutzer manuell verstellen. Die linke Heckspoilereinrichtung 9 weist ein linkes Seiten-Luftleitelement 15, eine Hauptschwinge 16 und zwei Nebenschwingen 17 auf. Die Hauptschwinge 16 und die zwei Nebenschwingen 17 sind jeweils zwischen der linken Hecktür 6 und dem Seiten-Luftleitelement 15 angelenkt. Die Hauptschwinge 16 ist mit einem Ende somit in einem vorderen Gelenk 16a an einer Gelenkachse A an der linken Hecktür 6, um mit ihrem anderen Ende über ein hinteres Gelenk 16b in einer Gelenkachse C an dem linken Seiten-Luftleitelement 15 angelenkt. Wie aus Fig. 3 ersichtlich, kann die hintere Gelenkachse C nahe am hinteren Ende des Seiten-Luftleitelementes 15 anliegen, um eine hohe Stabilisierung zu erreichen und ein Flattern des Seiten-Luftleitelementes 15 wirksam zu unterbinden. Statt einer großen Hauptschwinge 16 können auch z. B. zwei mit fluchtenden Gelenkachsen A und B angebrachte Hauptschwingen 16 vorgesehen sein.

Die beiden Nebenschwingen 17 sind jeweils in einem vorderen Gelenk 17a in einer vorderen Gelenkachse B an der linken Hecktür 6 und in einem hinteren Gelenk 17b in einer hinteren Gelenkachse D an dem Seiten- Luftleitelement 15 angelenkt. Bei der gezeigten Ausführungsform sind zwei Nebenschwingen 17 vertikal übereinander mit fluchtenden Gelenken 17a in der gemeinsamen vorderen Gelenkachse B und fluchtenden Gelenken 17b in der gemeinsamen hinteren Gelenkachse D vorgesehen, wobei sie oberhalb und unterhalb der Hauptschwinge 16 vorgesehen sind, um eine gute Stabilisierung zu erreichen.

Die Hauptschwinge 16 und die beiden Nebenschwingen 17 bilden zusammen eine Vier-Gelenk-Kopplung 18 mit den vier Gelenkachsen A, B, C, D, die somit eine Zwangsführung bzw. eindeutige Führung des Seiten- Luftleitelementes 15 bei dessen Verstellung zwischen der Grundstellung der Fig. 1 und der Fahrstellung der Fig. 3 darstellt. Die Hauptschwinge 16 ist hierbei mit einer größeren Erstreckung bzw. Wirklänge ausgebildet als die beiden Nebenschwingen 17, d. h. der Abstand zwischen den Gelenkachsen A und C der Hauptschwinge 16 ist größer als der Abstand zwischen den Gelenkachsen B und D der Nebenschwingen 17. Hierdurch wird folgende Verstellung bzw. Verstellbewegung erreicht:
In der Grundstellung der Fig. 1 liegen die beiden Nebenschwingen 17 und die Hauptschwinge 16 flach auf der geschlossenen und sich somit in der YZ-Ebene erstreckenden Hecktür 6 auf. Das Seiten-Luftleitelement 15 liegt flach auf der Hecktür 6, den beiden Nebenschwingen 17 und der Hauptschwinge 16, d. h. es ist flach und sich somit in der YZ-Ebene erstreckend auf die Schwingen 16, 17 aufgelegt und verdeckt diese somit teilweise, wie aus Fig. 1 und aus der Aufsicht der Fig. 6 ersichtlich ist. Beim nachfolgenden Aufschwenken beschreibt die Gelenkachse D eine Schwenkbewegung um etwa 180° bzw. etwas weniger als 180°. Hierzu ist in den Fig. 6, 7, 8 die Verstellung der rechten Heckspoilereinrichtung 10 gezeigt, mit den Schwenkbewegungen des Seiten-Luftleitelementes 25, der Hauptschwinge 26 mit ihren Gelenken 26a und 26b sowie der Nebenschwingen 27 mit ihren Gelenken 27a und 27b.

Entsprechend wird die Gelenkachse D und somit auch das vordere Ende 15a, 25a des Seiten-Luftleitelementes 15, 25 vorgeschwenkt. Das vordere Ende 15a, 25a des Seiten-Luftleitelementes 15, 25 gelangt somit zum Anschluss an entweder die Fahrzeugstruktur 2 oder die Seitenwand 3. Insbesondere wird eine Schwenkbewegung unterstützt, bei der das vordere Ende 15a, 25a seitlich auf die Fahrzeugstruktur 2 oder direkt an die Seitenwand 3 anschließt, so dass ein bündiger, weitgehend kantenfreier Übergang zur aerodynamischen Konturverlängerung von der Seitenwand 3 nach hinten erreicht wird. Das Seiten-Luftleitelement 15, 25 erstreckt sich hierbei in der Fahrstellung der Fig. 3, 4 und 8 von seinem vorderen Ende 15a, 25a aus nach hinten zur Mitte hin, so dass sein hinteres Ende 15b, 25b in Querrichtung etwas zur Mitte des Fahrzeugs hin versetzt ist, so dass die aerodynamische Querschnittsverringerung zur Verhinderung oder Verringerung eines Abrisswirbels ausgebildet wird.

Die Hauptschwinge 16, 26 schwenkt somit um einen kleineren Winkel als die Nebenschwingen 17, 27.

Die Endposition, d. h. die Grundstellung der Fig. 1 und die Fahrstellung der Fig. 3, bzw. beide Fahrstellungen nach Fig. 4, können insbesondere durch Arretierungen oder Verriegelungen 64, 65 gesichert sein, die an der Hecktür 6 angebracht sind und insbesondere eine Nebenschwinge 17 fixieren können, da die beiden Nebenschwingen 17 in beiden Endstellungen, d.h. Fahrstellung und Grundstellung, im Wesentlichen flach auf der Hecktür 6 aufliegen. Somit wird durch die Vier-Gelenk-Kopplung eine feste Verriegelung des Seiten-Luftleitelementes 15 und der Schwingen 16, 17 erreicht. Vorteilhafterweise ist das vordere Ende 15a des Seiten-Luftleitelementes 15 ergänzend verriegelt, z. B. an der Fahrzeugstruktur 2 oder der Seitenwand 3. Eine derartige Verriegelung ist jedoch grundsätzlich nicht erforderlich, da die Fixierung durch eine Verriegelung 65 an einer Nebenschwinge 17 oder beide Nebenschwingen 17 ausreichend ist.

Die linke Heckspoilereinrichtung 9 weist weiterhin ein Dach-Luftleitelement 35 auf, das in der gezeigten Ausführungsform mit seinem oberen Ende 35a in einer Klappachse E an der Fahrzeugstruktur 2 angelenkt ist; die Klappachse E verläuft somit in Querrichtung Y und kann insbesondere nahe am oberen Ende der Fahrzeugstruktur 2 ausgebildet sein, damit das Dach-Luftleitelement 35 in der ausgefahrenen Stellung weitgehend bündig mit dem Dach 4 und dem oberen Teil der Fahrzeugstruktur 2 abschließt. Das Dach-Luftleitelement 35 schwenkt um vorteilhafterweise weniger als 90° auf. Entsprechend weist die rechte Heckspoilereinrichtung 10 ein Dach- Luftleitelement 36 auf.

Die Verstellbewegungen des Seiten-Luftleitelementes 15, 25 und des Dach-Luftleitelementes 35, 36 sind durch Kopplungseinrichtungen 40, 44 gemäß unterschiedlichen Ausführungsformen miteinander gekoppelt, so dass eine Verstellung des Seiten-Luftleitelementes 15, 25 selbsttätig eine Verstellung des Dach-Luftleitelementes 35, 36 bewirkt. Die linke Heckspoilereinrichtung 9 und die rechte Heckspoilereinrichtung 10 sind hierbei separat voneinander verstellbar, so dass z. B. in Fig. 3 ein Zugang zu der rechten Hecktüre 8 bei aufgestellter linker Heckspoilereinrichtung 9 gegeben ist.

Gemäß Fig. 4 ist eine feste Kopplungseinrichtung 40 vorgesehen, die somit eine druckstabile und zugstabile Kopplung zwischen einer Oberkante 15c des Seiten-Luftleitelementes 15 und einer Unterseite 35e des linken Seiten-Luftleitelementes 35 bewirkt. Die linke und rechte Kopplungseinrichtung 40 weisen jeweils ein Kopplungselement 41 und eine Kopplungsaufnahme 42 auf, wobei das Kopplungselement 41 fest an der Oberkante 15c des linken Seiten-Luftleitelementes 15 bzw. des rechten Seiten-Luftleitelementes 25 angebracht ist und in der Kopplungsaufnahme 42 an der Unterseite 35e bzw. 36e des Dach-Luftleitelementes 35 bzw. 36 läuft, so dass die Kopplungsaufnahmen 42 jeweils die Spur bzw. den Verlauf der Position des Kopplungselementes 41 während der Verstellung wiedergeben.

Entsprechend dem Schwenkvorgang des jeweiligen Seiten- Luftleitelementes 15, 25 und dem Klappvorgang bzw. Schwenkvorgang um die feste Schwenkachse E des Dach-Luftleitelementes 35, 36 ergibt sich entsprechend eine bogenförmige, z. B. kreisbogenförmige Kopplungsaufnahme 42, wie auch aus den Aufsichten der Figuren 6 bis 8 ersichtlich ist.

Hierbei liegt eine eindeutige Führung und Kopplung zwischen der Verstellbewegung des Seiten-Luftleitelementes 15 und dem Dach- Luftleitelement 35 vor. Bei der Aufstellbewegung von Fig. 1 und Fig. 3 liegt eine Druckbelastung des Kopplungselementes 41 in der Kopplungsaufnahme 42 vor; beim Rückverstellen von Fig. 3 in Fig. 1 schwenkt das Dach-Luftleitelement 35 aufgrund des Eigengewichtes nach unten, wobei zusätzlich zu der Druckbelastung durch Eigengewicht grundsätzlich eine zugstabile Kopplung vorliegt.

Die Kopplungsaufnahme 42 kann insbesondere als Schiene, d. h. insbesondere als Gleitführung, ausgebildet sein, die z. B. das Kopplungselement 41 zu zwei Seiten hin festlegt, so dass es eine eindeutige Bahn beschreibt.

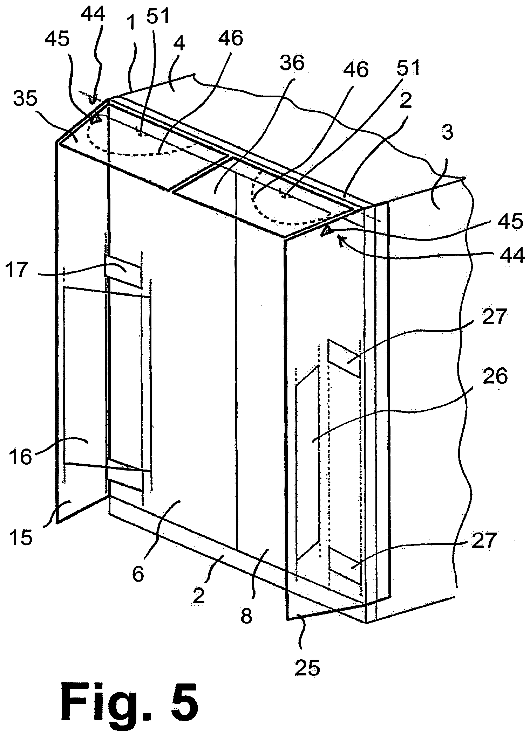

Bei der Ausführungsform der Fig. 5 liegt das Dach-Luftleitelement 35, 36 mit seiner Unterseite 35e, 36e auf einem Auflageelement 45, das an der Oberkante 15c, 25c des Seiten-Luftleitelementes 15, 25 angebracht ist oder als Teil des Seiten-Luftleitelementes 15, 25 ausgebildet ist. Somit wird die Kopplungseinrichtung 44 der Fig. 5 durch das Auflageelement 45 und eine Gleitfläche 46 an der Unterseite 35e bzw. 36e ausgebildet, wobei die Gleitfläche 46 verstärkt sein kann oder einfach ein Teil der Unterseite 35e bzw. 36e des Dach-Luftleitelementes 35, 36 ist. Somit liegt eine schwerkraftunterstützte Kopplung zwischen dem Dach-Luftleitelement 35 und dem Seiten-Luftleitelement 15 vor, wobei gegebenenfalls zusätzlich eine zwischen dem Dach-Luftleitelement 35 und der Hecktüre 6 vorgesehene Federeinrichtung 51 das jeweilige Dach-Luftleitelement 35, 36 nach unten drückt. Beim Aufstellvorgang von der Fig. 1 in die Fig. 3 wird das Dach-Luftleitelement 35 somit gegen die Schwerkraft nach oben gedrückt. Beim Rückverstellen klappt es selbsttätig durch die Schwerkraft nach unten.

Bei beiden Ausführungsformen kann der Benutzer aufgrund der Vier- Gelenk-Kopplung und der eindeutigen Führung bzw. Zwangsführung des Seiten-Luftleitelementes 15, 25 die Verstellung z. B. mit einer Hand vornehmen. Durch die geringe Reibung in den Gelenken der Vier-Gelenk-Kopplung 18, und insbesondere durch die Kraftuntersetzung der Aufstellbewegung bzw. des Hochklappens des Seiten-Luftleitelementes 35, 36 beim Ausfahren der Heckspoilereinrichtung 9 bzw. 10 aufgrund der großen Bogenlänge der Kopplungsaufnahme 42 oder Gleitfläche 46 ist der gesamte Kraftaufwand gering und kann von einem Benutzer manuell vorgenommen werden. Nach einer Entriegelung der Verriegelung 64 kann der Benutzer somit z. B. zunächst das Seiten-Luftleitelement 15 ergreifen und nach außen schwenken. Hierbei können Federeinrichtungen 68 vorgesehen sein, z. B. bistabile Federeinrichtungen 68, die die Verstellungen unterstützen und in die Fahrstellung und Grundstellung vorgespannt sind. Somit erfolgt die Verstellung von der Fahrstellung und Grundstellung aus zunächst gegen die Federwirkung, bis ein Totpunkt durchlaufen wird, woraufhin dann die Verstellung in die andere Position Federkraft unterstützt ist. Mit einem einzigen Betätigungsvorgang wird somit die Heckspoilereinrichtung 9 bzw. 10, d.h. sowohl das jeweilige Seiten-Luftleitelement 35, 36 als auch das Dach-Luftleitelement 35, 36 in die Fahrstellung verstellt. Auch die Rückverstellung von der Fahrstellung in die Grundstellung erfolgt mit einem einzigen Betätigungsvorgang.

Gemäß der Ausführungsform der Fig. 4 mit der zug- und druckstabilen Kopplung durch die Kopplungseinrichtung 40 mit dem Koppelelement 41 ist bereits eine Stabilisierung und Verriegelung des Dach-Luftleitelementes 35 möglich; es können zusätzlich z. B. Streben zwischen der Unterseite 35e des Dach-Luftleitelementes 35 und der Hecktür 6 aufgestellt werden. Bei der Ausführungsform der Fig. 5 kann eine zusätzliche Verriegelung bzw. Arretierung des Dach-Luftleitelementes 35 über eine Strebe erfolgen; grundsätzlich ist jedoch bereits die Federeinrichtung 51 ausreichend.

Von der Grundstellung der Fig. 1 aus kann der Benutzer die Hecktür 6 oder 8 auch um im Wesentlichen 270° nach vorne schwenken. Die Heckspoilereinrichtung 9 oder 10 liegt flach an der Hecktür 6 an und wird in der vorgeschwenkten Stellung zwischen der Hecktür 6 und der Seitenwand 3 aufgenommen; die Hecktür 6 kann hier an der Seitenwand 3 in üblicher Weise verriegelt werden.

## Patentansprüche

1. Heckspoilereinrichtung (9, 10) für ein mindestens eine Hecktür (6, 8) aufweisendes Fahrzeug (1), wobei die Heckspoilereinrichtung (9, 10) mindestens aufweist:
ein Seiten-Luftleitelement (15, 25), das zwischen einer eingefahrenen Grundstellung und einer Fahrstellung zur Konturverlängerung und aerodynamischen Luftleitung verstellbar ist,
ein Dach-Luftleitelement (35, 36), das zwischen einer Grundstellung und einer Fahrstellung zur Konturverlängerung und aerodynamischen Luftleitung verstellbar ist, und
einer Kopplungseinrichtung (40, 44) zum Koppeln der Verstellbewegungen des Seiten-Luftleitelementes (15, 25) und des Dach- Luftleitelementes (35, 36),
**dadurch gekennzeichnet, dass**
die Kopplungseinrichtung (40, 44) zwischen einer Unterseite (35e) des Dach-Luftleitelementes (35) und einem oberen Ende (15c) des Seiten-Luftleitelementes (15) vorgesehen ist, wobei das obere Ende (15c, 25c) des Seiten-Luftleitelementes (15, 25) bei der Verstellbewegung an der Unterseite (35e, 36e) des Dach- Luftleitelementes (35, 36) entlang verstellbar ist.

2. Heckspoilereinrichtung (9, 10) nach Anspruch 1, **dadurch gekennzeichnet, dass** das obere Ende (15c, 25c) des Seiten-Luftleitelementes (15, 25) bei der Verstellbewegung gegenüber der Unterseite (35e, 36e) des Dach- Luftleitelementes (35, 36) mit einem Verlauf in einer Bogenform, insbesondere Kreisbogenform, verstellbar ist.

3. Heckspoilereinrichtung (9, 10) nach Anspruch 1 oder 2, **dadurch gekennzeichnet, dass** die Kopplungseinrichtung (40) ein an der Oberseite (15c, 25c) des Seiten-Luftleitelementes (15, 25) vorgesehenes Kopplungselement (41) und eine an der Unterseite (35e) des Dach- Luftleitelementes (35, 36) ausgebildete Kopplungsaufnahme (42) aufweist, in der das Kopplungselement (41) aufgenommen und für die Verstellbewegung geführt ist.

4. Heckspoilereinrichtung (9, 10) nach Anspruch 3, **dadurch gekennzeichnet, dass** die Kopplungseinrichtung (40) zur druckstabilen und zugstabilen Kopplung zwischen dem Dach-Luftleitelement (35, 36) und dem Seiten-Luftleitelement (15, 16) ausgebildet ist.

5. Heckspoilereinrichtung (9, 10) nach Anspruch 3 oder 4, **dadurch gekennzeichnet, dass** die Kopplungsaufnahme (42) als Schiene und/oder formschlüssige Hintergreifung ausgebildet ist.

6. Heckspoilereinrichtung (9, 10) nach Anspruch 1 oder 2, **dadurch gekennzeichnet, dass** das Dach-Luftleitelement (35, 36) mit seiner Unterseite (35e, 36e) auf dem Seiten-Luftleitelement (15, 25) und/oder einem an dem Seiten-Luftleitelement (15, 25) angebrachten Auflageelement (45) schwerkraftunterstützt aufliegt.

7. Heckspoilereinrichtung (9, 10) nach Anspruch 6, **dadurch gekennzeichnet, dass** eine Federeinrichtung (51) zur Federvorspannung des Dach-Luftleitelementes (35, 36) nach unten auf das Seiten- Luftleitelement (15, 25) vorgesehen ist.

8. Heckspoilereinrichtung (9, 10) nach einem der vorherigen Ansprüche, **dadurch gekennzeichnet, dass** das Seiten-Luftleitelement (15) durch die Verstelleinrichtung (18) zwischen seiner Grundstellung und seiner Fahrstellung eindeutig oder mit einem einzigen Freiheitsgrad geführt ist.

9. Heckspoilereinrichtung (9, 10) nach einem der vorherigen Ansprüche, **dadurch gekennzeichnet, dass** die Verstelleinrichtung (18) eine Vier-Gelenk-Kopplung aufweist mit vier Gelenkachsen (A, B, C, D) mit mindestens einer Hauptschwinge (16, 26), die in einer vorderen Gelenkachse (A) an der Hecktüre (6, 8) anlenkbar und in einer hinteren Gelenkachse (C) an dem Seiten-Luftleitelement (15, 25) anlenkbar ist, und mindestens einer Nebenschwinge (17, 27), die in einer vorderen Gelenkachse (b) an der Hecktür (6, 8) und in einer hinteren Gelenkachse (D) an dem Seiten-Luftleitelement (15, 25) anlenkbar ist,
wobei die Vier-Gelenk-Achsen (A, B, C, D) zueinander parallel verlaufen und verschieden sind.

10. Heckspoilereinrichtung (9, 10) nach Anspruch 9, **dadurch gekennzeichnet, dass** ein vorderes Gelenk (17a, 27a) der Nebenschwinge (17, 27) näher an einer Seitenwand (3) des Fahrzeugs vorgesehen ist als ein vorderes Gelenk (16a, 26a) der Hauptschwinge (16, 26),
wobei die Nebenschwinge (17, 27) bei der Verstellbewegung von der Grundstellung in die Fahrstellung zum Durchschwenken eines größeren Schwenkwinkels als die Hauptschwinge (16) ausgelegt ist,
wobei bei der Verstellbewegung ein vorderes Ende (15a, 25a) des Seiten-Luftleitelementes (15, 25) zum Durchlaufen einer Schwenkbewegung von der Hecktür (6, 8) nach hinten, seitlich nach außen und nach vorne ausgebildet ist,
wobei das vordere Ende (15a, 25a) des Seiten-Luftleitelementes (15, 25) in der Fahrstellung an der Seitenwand (3) und/oder an einem seitlichen Bereich der Fahrzeugstruktur (2) anliegt.

11. Heckspoilereinrichtung (9, 10) nach einem der vorherigen Ansprüche, **dadurch gekennzeichnet, dass** das Dach-Luftleitelement (35, 36) in einer horizontalen Klappachse (E) an der Hecktür (6, 8) angelenkt ist und bei der Verstellung eine Klappbewegung von einer vertikalen Ruhestellung um weniger als einen rechten Winkel in eine Fahrstellung mit nach hinten abfallendem hinteren Ende (35b) ausbildet.

12. Heckspoilereinrichtung (9, 10) nach einem der vorherigen Ansprüche, **dadurch gekennzeichnet, dass** sie vollständig an der Hecktür (6, 8) anbringbar ist.

13. Heckspoilereinrichtung (9, 10) nach Anspruch 12, **dadurch gekennzeichnet, dass** die Heckspoilereinrichtung (9, 10) in ihrer Grundstellung bei Vorklappen der Hecktür (6, 8) zwischen der Hecktür (6, 8) und der Seitenwand (3) aufnehmbar ist, vorzugsweise in einer verriegelten Stellung der Hecktür (6, 8) an der Seitenwand (3).

14. Heckspoilereinrichtung (9, 10) nach einem der vorherigen Ansprüche, **dadurch gekennzeichnet, dass** in der Grundstellung
die Nebenschwinge (17, 27) und die Hauptschwinge (16, 26) flach auf der Hecktür (6, 8) auflegbar sind,
das Seiten-Luftleitelement (15, 16) flach auf der Nebenschwinge (17, 27), der Hauptschwinge (16, 26) und der Hecktüre (6, 8) auflegbar ist, und
das Dach-Luftleitelement (35, 36) flach auf dem Seiten-Luftleitelement (15, 16) auflegbar ist, zur flachen Ausbildung der Heckspoilereinrichtung (9, 10).

15. Heckspoileranordnung (13) für ein Fahrzeug (1), die eine linke Heckspoilereinrichtung (9) nach einem der vorherigen Ansprüche und eine rechte Heckspoilereinrichtung (10) nach einem der vorherigen Ansprüche aufweist, die unabhängig voneinander zwischen der Grundstellung und der Fahrstellung verstellbar sind.

16. Fahrzeug (1) mit einer Heckspoileranordnung (13) nach Anspruch 15, wobei das Fahrzeug (1) ein Dach (4), Seitenwände (3) und eine Fahrzeugstruktur (2) und zwei jeweils nach außen aufschwenkbare Hecktüren (6, 8) aufweist, wobei in der Grundstellung der Heckspoiler einrichtungen (9, 10) die Hecktüren (6, 8) von der geschlossenen Position um im Wesentlichen 270° nach vorne schwenkbar sind, zur Anlage und Verriegelung an den Seitenwänden (3).

## Claims

1. Rear spoiler device (9, 10) for a vehicle (1) having at least one rear door (6, 8), wherein the rear spoiler device (9, 10) has at least:
a side air guiding element (15, 25) which can be adjusted between a retracted basic position and a travel position for contour extension and aerodynamic air guiding,
a roof air guiding element (35, 36) which can be adjusted between a basic position and a travel position for contour extension and aerodynamic air guiding, and
a coupling device (40, 44) for coupling the adjustment movements of the side air guiding element (15, 25) and the roof air guiding element (35, 36),
**characterized in that**
the coupling device (40, 44) is provided between a lower side (35e) of the roof air guiding element (35) and an upper end (15c) of the side air guiding element (15), wherein the upper end (15c, 25c) of the side air guiding element (15, 25) can be adjusted along the lower side (35e, 36e) of the roof air guiding element (35, 36) during the adjustment movement.

2. Rear spoiler device (9, 10) according to Claim 1, **characterized in that** the upper end (15c, 25c) of the side air guiding element (15, 25) can be adjusted with respect to the lower side (35e, 36e) of the roof air guiding element (35, 36) with a curved, in particular circular path during the adjustment movement.

3. Rear spoiler device (9, 10) according to Claim 1 or 2, **characterized in that** the coupling device (40) has a coupling element (41) which is provided on the upper side (15c, 25c) of the side air guiding element (15, 25) and a coupling receiving member (42) which is constructed on the lower side (35e) of the roof air guiding element (35, 36) and in which the coupling element (41) is received and guided for the adjustment movement.

4. Rear spoiler device (9, 10) according to Claim 3, **characterized in that** the coupling device (40) is constructed for pressure-resistant and tension-resistant coupling between the roof air guiding element (35, 36) and the side air guiding element (15, 16).

5. Rear spoiler device (9, 10) according to Claim 3 or 4, **characterized in that** the coupling receiving member (42) is constructed as a rail and/or a positive-locking rear engagement.

6. Rear spoiler device (9, 10) according to Claim 1 or 2, **characterized in that** the roof air guiding element (35, 36) is positioned with the lower side (35e, 36e) thereof on the side air guiding element (15, 25) and/or is positioned on a support element (45) which is fitted to the side air guiding element (15, 25) in a state supported by gravitational force.

7. Rear spoiler device (9, 10) according to Claim 6, **characterized in that** a resilient device (51) is provided for resiliently pretensioning the roof air guiding element (35, 36) downward onto the side air guiding element (15, 25).

8. Rear spoiler device (9, 10) according to one of the preceding claims, **characterized in that** the side air guiding element (15) is guided by the adjustment device (18) between the basic position and the travel position thereof clearly or with a single degree of freedom.

9. Rear spoiler device (9, 10) according to one of the preceding claims, **characterized in that** the adjustment device (18) has a four-bar coupling with four articulation axes (A, B, C, D) having at least one main rocker arm (16, 26), which can be articulated to the rear door (6, 8) in a front articulation axis (A) and can be articulated to the side air guiding element (15, 25) in a rear articulation axis (C), and
at least one auxiliary rocker arm (17, 27), which can be articulated to the rear door (6, 8) in a front articulation axis (b) and can be articulated to the side air guiding element (15, 25) in a rear articulation axis (D),
wherein the four articulation axes (A, B, C, D) extend parallel with each other and are different.

10. Rear spoiler device (9, 10) according to Claim 9, **characterized in that** a front link (17a, 27a) of the auxiliary rocker arm (17, 27) is provided closer to a side wall (3) of the vehicle than a front link (16a, 26a) of the main rocker arm (16, 26),
wherein the auxiliary rocker arm (17, 27) during the adjustment movement from the basic position into the travel position is configured to pivot through a larger pivot angle than the main rocker arm (16),
wherein during the adjustment movement a front end (15a, 25a) of the side air guiding element (15, 25) is constructed to pass through a pivot movement of the rear door (6, 8) toward the rear,laterally outward and forward,
wherein the front end (15a, 25a) of the side air guiding element (15, 25) in the travel position adjoins the side wall (3) and/or a lateral region of the vehicle structure (2).

11. Rear spoiler device (9, 10) according to one of the preceding claims, **characterized in that** the roof air guiding element (35, 36) is articulated to the rear door (6, 8) in a horizontal folding axis (E) and during the adjustment forms a folding movement from a vertical rest position through less than a right angle into a travel position with a rear end (35b) which slopes in a backward direction.

12. Rear spoiler device (9, 10) according to one of the preceding claims, **characterized in that** it can be fitted completely to the rear door (6, 8).

13. Rear spoiler device (9, 10) according to Claim 12, **characterized in that** the rear spoiler device (9, 10) in the basic position thereof when the rear door (6, 8) is folded forward can be received between the rear door (6, 8) and the side wall (3), preferably in a locked position of the rear door (6, 8) on the side wall (3).

14. Rear spoiler device (9, 10) according to one of the preceding claims, **characterized in that** in the basic position
the auxiliary rocker arm (17, 27) and the main rocker arm (16, 26) can be placed flat on the rear door (6, 8),
the side air guiding element (15, 16) can be placed flat on the auxiliary rocker arm (17, 27), the main rocker arm (16, 26) and the rear door (6, 8), and
the roof air guiding element (35, 36) can be placed flat on the side air guiding element (15, 16) for flat construction of the rear spoiler device (9, 10).

15. Rear spoiler arrangement (13) for a vehicle (1), which has a left rear spoiler device (9) according to one of the preceding claims and a right rear spoiler device (10) according to one of the preceding claims, which can be adjusted independently of each other between the basic position and the travel position.

16. Vehicle (1) having a rear spoiler arrangement (13) according to claim 15, wherein the vehicle (1) has a roof (4), side walls (3) and a vehicle structure (2) and two rear doors (6, 8) which can each be pivoted outward, wherein in the basic position of the rear spoiler devices (9, 10) the rear doors (6, 8) can be pivoted forward from the closed position through substantially 270° for abutment against and locking on the side walls (3).

## Revendications

1. Dispositif déflecteur arrière (9, 10) pour un véhicule (1) présentant au moins une porte arrière (6, 8), le dispositif déflecteur arrière (9, 10) présentant au moins :
un élément de guidage d'air latéral (15, 25) qui peut être réglé entre une position de base rentrée et une position de conduite prévue pour prolonger le contour et pour guider l'air de manière aérodynamique,
un élément de guidage d'air de toit (35, 36) qui peut être réglé entre une position de base et une position de conduite prévue pour prolonger le contour et pour guider l'air de manière aérodynamique, et
un dispositif d'accouplement (40, 44) pour accoupler les mouvements de réglage de l'élément de guidage d'air latéral (15, 25) et de l'élément de guidage d'air de toit (35, 36),
**caractérisé en ce que**
le dispositif d'accouplement (40, 44) est prévu entre un côté inférieur (35e) de l'élément de guidage d'air de toit (35) et une extrémité supérieure (15c) de l'élément de guidage d'air latéral (15), l'extrémité supérieure (15c, 25c) de l'élément de guidage d'air latéral (15, 25) pouvant être réglée lors du mouvement de réglage le long du côté inférieur (35e, 36e) de l'élément de guidage d'air de toit (35, 36).

2. Dispositif déflecteur arrière (9, 10) selon la revendication 1, **caractérisé en ce que** l'extrémité supérieure (15c, 25c) de l'élément de guidage d'air latéral (15, 25), lors du mouvement de réglage, peut-être réglée par rapport au côté inférieur (35e, 36e) de l'élément de guidage d'air de toit (35, 36) avec une allure en forme d'arc, en particulier en forme d'arc de cercle.

3. Dispositif déflecteur arrière (9, 10) selon la revendication 1 ou 2, **caractérisé en ce que** le dispositif d'accouplement (40) présente un élément d'accouplement (41) prévu au niveau du côté supérieur (15c, 25c) de l'élément de guidage d'air latéral (15, 25) et un logement d'accouplement (42) réalisé au niveau du côté inférieur (35e) de l'élément de guidage d'air de toit (35, 36), dans lequel logement d'accouplement l'élément d'accouplement (41) est reçu et est guidé en vue du mouvement de réglage.

4. Dispositif déflecteur arrière (9, 10) selon la revendication 3, **caractérisé en ce que** le dispositif d'accouplement (40) est réalisé en vue d'un accouplement stable à la pression et à la traction entre l'élément de guidage d'air de toit (35, 36) et l'élément de guidage d'air latéral (15, 16).

5. Dispositif déflecteur arrière (9, 10) selon la revendication 3 ou 4, **caractérisé en ce que** le logement d'accouplement (42) est réalisé sous forme de rail et/ou sous forme d'élément d'engagement par l'arrière par correspondance de formes.

6. Dispositif déflecteur arrière (9, 10) selon la revendication 1 ou 2, **caractérisé en ce que** l'élément de guidage d'air de toit (35, 36) repose, sous l'effet de la force de pesanteur, avec son côté inférieur (35e, 36e) sur l'élément de guidage d'air latéral (15, 25) et/ou sur un élément d'appui (45) monté sur l'élément de guidage d'air latéral (15, 25).

7. Dispositif déflecteur arrière (9, 10) selon la revendication 6, **caractérisé en ce qu'**il est prévu un dispositif de ressort (51) pour appliquer une précontrainte par ressort à l'élément de guidage d'air de toit (35, 36) vers le bas sur l'élément de guidage d'air latéral (15, 25).

8. Dispositif déflecteur arrière (9, 10) selon l'une quelconque des revendications précédentes, **caractérisé en ce que** l'élément de guidage d'air latéral (15) est guidé par le dispositif de réglage (18) entre sa position de base et sa position de conduite de manière univoque ou avec un seul degré de liberté.

9. Dispositif déflecteur arrière (9, 10) selon l'une quelconque des revendications précédentes, **caractérisé en ce que** le dispositif de réglage (18) présente un accouplement à quadrilatère articulé avec quatre axes d'articulation (A, B, C, D) avec au moins un bras oscillant principal (16, 26) qui peut être articulé dans un axe d'articulation avant (A) à la porte arrière (6, 8) et dans un axe d'articulation arrière (C) à l'élément de guidage d'air latéral (15, 25), et au moins un bras oscillant secondaire (17, 27) qui peut être articulé dans un axe d'articulation avant (b) à la porte arrière (6, 8) et dans un axe d'articulation arrière (D) à l'élément de guidage d'air latéral (15, 25), les axes du quadrilatère articulé (A, B, C, D) s'étendant parallèlement les uns aux autres et étant différents.

10. Dispositif déflecteur arrière (9, 10) selon la revendication 9, **caractérisé en ce qu'**une articulation avant (17a, 27a) du bras oscillant secondaire (17, 27) est plus proche d'une paroi latérale (3) du véhicule qu'une articulation avant (16a, 26a) du bras oscillant principal (16, 26), le bras oscillant secondaire (17, 27), lors du mouvement de réglage de la position de base dans la position de conduite étant conçu pour pivoter sur un plus grand angle de pivotement que le bras oscillant principal (16), une extrémité avant (15a, 25a) de l'élément de guidage d'air latéral (15, 25), lors du mouvement de réglage, étant réalisée de manière à effectuer un mouvement de pivotement depuis la porte arrière (6, 8) vers l'arrière, latéralement vers l'extérieur et vers l'avant, l'extrémité avant (15a, 25a) de l'élément de guidage d'air latéral (15, 25) s'appliquant dans la position de conduite contre la paroi latérale (3) et/ou contre une région latérale de la structure de véhicule (2).

11. Dispositif déflecteur arrière (9, 10) selon l'une quelconque des revendications précédentes, **caractérisé en ce que** l'élément de guidage d'air de toit (35, 36) est articulé dans un axe de rabattement horizontal (E) à la porte arrière (6, 8) et effectue lors du réglage un mouvement de rabattement d'une position de repos verticale de moins d'un angle droit dans une position de conduite avec l'extrémité arrière (35b) descendant vers l'arrière.

12. Dispositif déflecteur arrière (9, 10) selon l'une quelconque des revendications précédentes, **caractérisé en ce qu'**il peut être monté complètement sur la porte arrière (6, 8).

13. Dispositif déflecteur arrière (9, 10) selon la revendication 12, **caractérisé en ce que** le dispositif déflecteur arrière (9, 10), dans sa position de base, peut être reçu lors du rabattement de la porte arrière (6, 8) entre la porte arrière (6, 8) et la paroi latérale (3), de préférence dans une position verrouillée de la porte arrière (6, 8) contre la paroi latérale (3).

14. Dispositif déflecteur arrière (9, 10) selon l'une quelconque des revendications précédentes, **caractérisé en ce que**, dans la position de base, le bras oscillant secondaire (17, 27) et le bras oscillant principal (16, 26) peuvent être appliqués à plat sur la porte arrière (6, 8), l'élément de guidage d'air latéral (15, 16) peut être appliqué à plat sur le bras oscillant secondaire (17, 27), le bras oscillant principal (16, 26) et la porte arrière (6, 8), et
l'élément de guidage d'air de toit (35, 36) peut être appliqué à plat sur l'élément de guidage d'air latéral (15, 16) en vue d'une réalisation plate du dispositif déflecteur arrière (9, 10).

15. Agencement de déflecteur arrière (13) pour un véhicule (1), qui présente un dispositif déflecteur arrière gauche (9) selon l'une quelconque des revendications précédentes et un dispositif déflecteur arrière droit (10) selon l'une quelconque des revendications précédentes, qui peuvent être réglés indépendamment l'un de l'autre entre la position de base et la position de conduite.

16. Véhicule (1) comprenant un agencement de déflecteur arrière (13) selon la revendication 15, dans lequel le véhicule (1) présente un toit (4), des parois latérales (3) et une structure de véhicule (2) et deux portes arrière (6, 8) pouvant chacune s'ouvrir par pivotement vers l'extérieur, les portes arrière (6, 8), dans la position de base des dispositifs déflecteur arrière (9, 10), pouvant pivoter d'environ 270° vers l'avant depuis la position fermée, pour venir en appui et se verrouiller contre les parois latérales (3).
